# EUROPÄISCHE PATENTSCHRIFT

(11) **EP 1 101 740 B1**
(45) Veröffentlichungstag und Bekanntmachung des Hinweises auf die Patenterteilung: **24.03.2004**
(21) Anmeldenummer: 00121736.3
(22) Anmeldetag: 05.10.2000
(51) Int. Cl.: C03B 5/167, C03B 5/225, C03B 5/027, C03B 7/02

(54) **Verfahren zur Verbesserung der Glasqualität**
Method for improving the glass quality
Procédé d'amélioration de la qualité du verre

(30) Priorität: 20.11.1999 DE 19955827
(43) Veröffentlichungstag der Anmeldung: 23.05.2001
(73) Patentinhaber: Schott Glas, 55122 Mainz (DE); CARL-ZEISS-STIFTUNG trading as SCHOTT GLAS, 55122 Mainz (DE)
(72) Erfinder: Baucke, Friedrich, Dr., 55116 Mainz (DE); Weber, Johann, 65193 Wiesbaden (DE); Pfeiffer, Thomas, Dr., 55128 Ingelheim (DE); Röth, Gernat, 55278 Dalheim (DE)
(74) Vertreter: Fuchs Mehler Weiss & Fritzsche

(56) Entgegenhaltungen:
- FR-A- 994 796
- US-A- 2 561 818
- US-A- 3 206 295

## Beschreibung

Die Erfindung betrifft ein Verfahren zur Unterdrückung der Bildung von O₂-Gasblasen an der Kontaktfläche zwischen einer Glasschmelze und einem aus Edelmetall bestehenden Teil einer Glasschmelzvorrichtung, insbesondere der Edelmetallauskleidung einer Speiserrinne. Die Bezeichnung Edelmetall umfaßt in diesem Zusammenhang Platin, Gold, Rhenium, alle anderen Metalle der Platingruppe sowie die Legierungen der genannten Metalle, sowie die genannten Metalle und Legierungen in dispersionsoxidverstärkter Form.

Glasschmelzen enthalten stets einen gewissen Wasseranteil, der bei den üblichen Glasschmelztemperaturen zu einem mehr oder weniger großen Prozentsatz in Wasserstoff und Sauerstoff aufgespalten ist. Da das für die Auskleidung von Teilen einer Glasschmelzvorrichtung verwendete Edelmetall für Wasserstoff durchlässig ist, führt die Abwanderung des Wasserstoffs an der Phasengrenze zwischen Edelmetall und Glasschmelze zu einer Anreicherung von Sauerstoff, der in Form von kleinen Bläschen in die Glasschmelze aufgenommen wird, wodurch die Qualität der erzeugten Glasprodukte erheblich beeinträchtigt werden kann. Die Entstehung von Gasbläschen an der Phasengrenze zwischen Edelmetall und Glasschmelze ist seit langem bekannt, ohne daß bisher wirksame Maßnahmen vorgeschlagen werden konnten, Qualität und Ausbeute der erzeugten Glasprodukte nennenswert zu verbessern, zumal Edelmetallteile bei der Glasherstellung auch noch stromab von den üblichen Läuterungsvorrichtungen, mit denen Gasblasen aus der Schmelze entfernt werden können, angeordnet werden müssen.

Der Sauerstoffpartialdruck einer Glasschmelze kann beispielsweise gemäß der DE 43 24 922 C2 über in die Schmelze eintauchende Elektroden gemessen werden, die über ein Spannungsmeßgerät miteinander verbunden sind. Wie in der US 4 603 980 erläutert, können auch die Temperatur und der elektrische Widerstand einer Glasschmelze gemessen werden, und zwar, indem hochfrequente Wechselströme angelegt werden. Beiden Meßmethoden ist zu eigen, daß darauf geachtet wird, daß in der Glasschmelze kein Strom während der Messung fließen kann, um die Eigenschaften der Glasschmelze nicht durch die Messung zu verändern.

In der DD-PS 201 297 wird eine Vorrichtung zum elektrischen Schmelzen von Glas beschrieben. Zur Beheizung der Wanne wird eine hochfrequente Wechselspannung angelegt. Auf den Ablauf der Läuterung wird durch Einblasen von gasförmigem Sauerstoff direkt in die Schmelze mit Hilfe von Düsen Einfluß genommen.

Es besteht somit die Aufgabe, die Bildung von O₂-Gasblasen an der Kontaktfläche zwischen einer Glasschmelze und einem aus Edelmetall bestehenden Teil einer Glasschmelzvorrichtung, insbesondere der Edelmetallauskleidung einer Speiserrinne wirksam zu unterdrücken.

Überraschenderweise hat sich gezeigt, daß dieses Ziel erreicht werden kann, wenn man den aus Edelmetall bestehenden Teil elektrisch leitend mit einer Elektrode oder mehreren Elektroden verbindet, die beabstandet von dem aus Edelmetall bestehenden Teil in der Glasschmelze angeordnet ist, und wenn man zwischen der Elektrode und dem aus Edelmetall bestehenden Teil ein Potentialgefälle derart erzeugt, daß ein Strom fließt. Wird an dem aus Edelmetall bestehenden Teil eine genügend große, elektrisch negative Potentialdifferenz bezogen auf die Glasschmelze aufrecht erhalten, so wird der nach Abwanderung des Wasserstoffs durch die Edelmetallwandung verbleibenden Sauerstoff ionisiert, d.h. in negativ geladene O²⁻-Ionen umgewandelt, die sich - anders als neutrale Sauerstoffmoleküle - in unbegrenzter Menge in der Schmelze lösen und sich nicht zu Gasblasen zusammenballen.

Umfangreiche Versuche haben gezeigt, daß mit den erfindungsgemäßen Maßnahmen der Anteil an Sauerstoffblasen im fertigen Glasprodukt bis auf kleine unschädliche Restmengen unterdrückt werden kann und daß Qualität und Ausbeute der Glasproduktion erheblich gesteigert werden konnten.

Vorteilhafte Ausgestaltungen des Erfindungsgedankens sind in den Unteransprüchen 2 bis 25 beschrieben. Weitere Einzelheiten werden anhand der in den Figuren 1 bis 4 schematisch dargestellten Ausführungsbeispielen näher erläutert. Es zeigen:
- Figur 1: eine Ausführungsform mit Gleichspannungsquelle
- Figur 2: eine Ausführungsform mit Regelwiderstand
- Figur 3: eine Ausführungsform mit Spülgasbetrieb
- Figur 4: eine Variante der Ausführungsform gemäß Figur 1 mit einer Einrichtung zur automatischen Regelung der Gleichspannungsquelle.

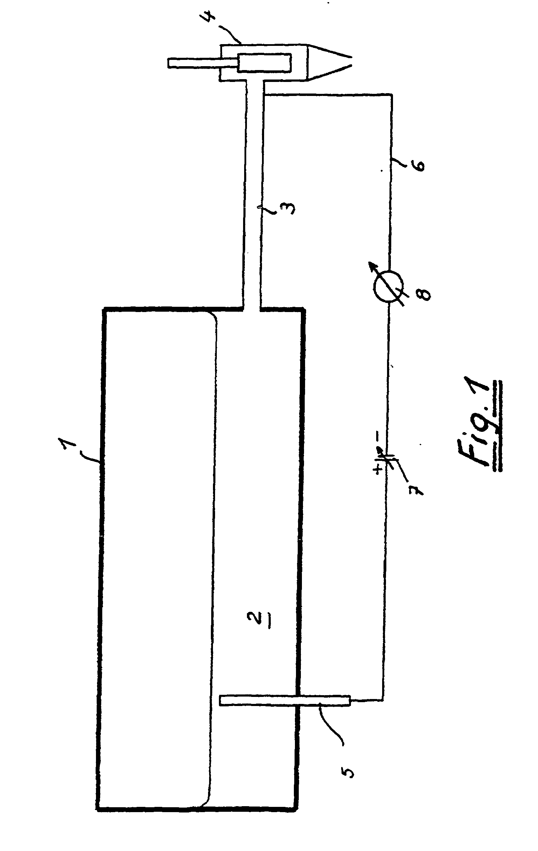

In den Figuren 1 bis 4 sind jeweils eine Schmelzwanne 1 mit Glasschmelze 2, Speiserrinne 3 und Rührtiegel 4 dargestellt.

Bei der Ausführungsform gemäß Figur 1 ist die Edelmetallauskleidung der Speiserrinne 3 über eine Leitung 6 mit einer oder mehreren in der Glasschmelze 2 angeordneten Elektrode 5 elektrisch leitend verbunden. In der Leitung 6 befinden sich außerdem eine regelbare Gleichspannungsquelle 7 sowie ein Strommeßgerät 8. Damit wird an der Platinauskleidung der Speiserrinne 3 erfindungsgemäß ein negatives elektrisches Potential erzeugt, mit dem die Bildung von Sauerstoffblasen wirksam unterdrückt werden kann, weil der infolge der Wasserstoffabwanderung durch die Edelmetallauskleidung zurückbleibende Sauerstoff ionisiert wird und sich daher nicht zu Gasblasen zusammenballt. An der aus Edelmetall bestehenden Elektrode 5 wird das elektrisch positive Gegenpotential erzeugt, so daß hier elektrisch negativ geladene Sauerstoffionen elektrisch neutralisiert werden können, sich zu Gasbläschen zusammenballen und im Gravitationsfeld aus der Glasschmelze nach oben austreten können. Durch den Abzug der Glasschmelze 2 unterhalb der Badoberfläche wird vermieden, daß Gasblasen oder Schaum in die Glasprodukte gelangt. Der Stromfluß wird gemessen und auf einen für die Behinderung der Bildung von O₂-Gasblasen optimalen Wert durch das Bedienungspersonal der Schmelzwanne oder eine automatische Regeleinrichtung eingestellt.

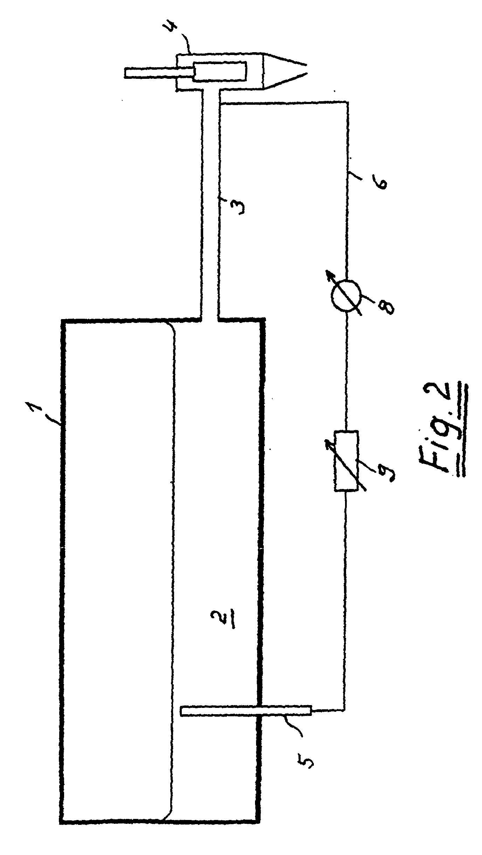

Bei der Ausführungsform gemäß Figur 2 besteht die Elektrode 5 aus einem Refraktärmetall, beispielsweise Molybdän. In der Verbindungsleitung 6 zwischen der Platinauskleidung der Speiserrinne 3 und der Elektrode 5 sind ein Strommeßgerät 8 und ein regelbarer Widerstand 9 angeordnet. Die aus Molybdän bestehende Elektrode löst sich in der Glasschmelze 2 allmählich auf, indem sie positiv geladene Metallionen in die Schmelze entläßt. Die zurückbleibenden Elektronen laden die Elektrode solange negativ auf, bis ein ausreichendes Potentialgefälle zur Edelmetallauskleidung in der Speiserrinne 3 entstanden ist. Über die Verbindungsleitung 6, das Strommeßgerät 8 und den regelbaren Widerstand 9 werden die Elektronen zur Edelmetallauskleidung der Speiserrinne 3 befördert, wo sie den nach Abwanderung des Wasserstoffs durch die Edelmetallauskleidung zurückbleibenden Sauerstoff ionisieren und so die Entstehung von Gasblasen unterdrücken. Das so erzeugbare Potentialgefälle kann einige hundert Millivolt betragen und wird zweckmäßigerweise überwacht und auf den für die Unterdrückung der O₂-Gasblasenbildung erforderlichen Wert eingeregelt.

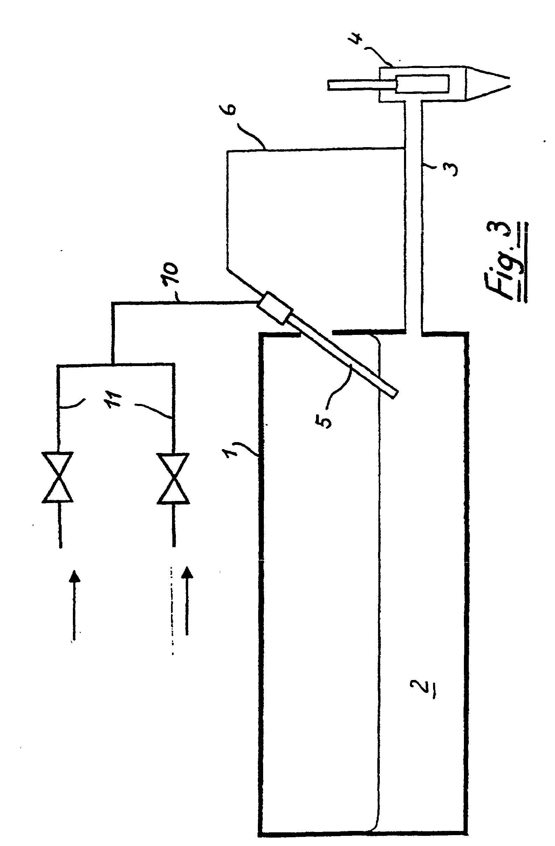

Bei der Ausführungsform gemäß Figur 3 werden eine oder mehrere endseitig geschlossene rohrförmige Elektroden aus yttrium-, calcium-, oder magnesiumstabilisierter Zirkoniumoxidkeramik verwendet, in deren Hohlraum ein Edelmetalldraht so angeordnet ist, daß er in der Spitze der Elektrode auf einer Strecke von ca. 2 bis 10 cm in direktem, elektrisch leitendem Kontakt zur Zirkoniumoxidkeramikwand steht. Oberhalb dieses Bereiches ist der Draht mit Feuerfestmaterial elektrisch isoliert und wird am Kopf der Elektrode mittels einer gasdichten, elektrisch isolierenden Durchführung nach außen geleitet. Er ist über die Verbindungsleitung 6 mit der Edelmetallauskleidung der Speiserrinne 3 elektrisch leitend verbunden. Außerdem ist das Innere der Elektrode 5 mit einer Spülgasleitung 10 verbunden, die über eine Gasmischanlage 11 mit einem Gasgemisch, beispielsweise aus Formiergas und Stickstoff beschickt wird. Yttrium, calcium-, und magnesiumstabilisierte Zirkoniumoxidkeramik ist oberhalb von 600° C, also auch bei den Temperaturen der Glasschmelze für Sauerstoffionen durchlässig, so daß über die Wandung der Elektrode 5 Sauerstoff aus der Glasschmelze abgeführt werden kann, wenn innerhalb der Elektrode mittels Spülgaszufuhr ein sehr niedriger Sauerstoffpartialdruck aufrecht erhalten wird. Durch Änderung der Zusammensetzung und/oder der Durchflußmenge des Spülgases kann der Sauerstoffpartialdruck im Inneren der Elektrode 5 in weiten Grenzen eingestellt werden. Auf diese Weise kann zwischen Zirkoniumelektrode und Edelmetallauskleidung der Speiserrinne ein elektrisches Potentialgefälle erzeugt werden, das in Betrag, Vorzeichen und Wirkung dem gleicht, das mittels einer Gleichspannungsquelle oder mit Hilfe des Galvanischen Elements aus Platin/Glasschmelze/Molybdän erzeugt wurde. Der Vorteil dieser Anordnung besteht drin, daß durch die Zirkoniumelektrode beim Betrieb keine Blasen erzeugt werden und im Gegensatz zur Molybdänelektrode auch kein Metallionen ins Glas übergehen.

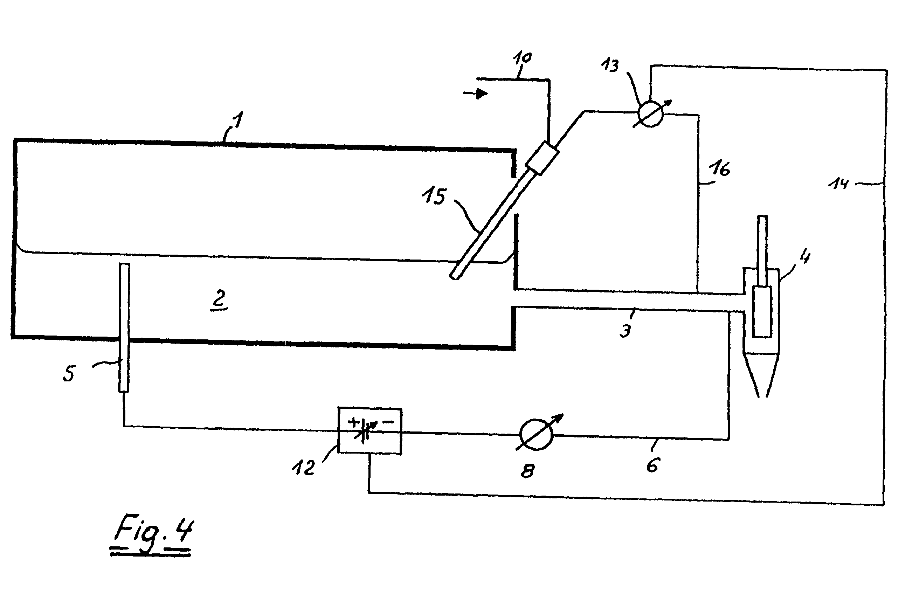

Bei der Ausführungsform gemäß Figur 4 wird eine Anlage gemäß Figur 1 mit einer automatischen Regelung versehen, deren Möglichkeiten schon bei der Beschreibung in Figur 1 erwähnt wurden. Die Elektrode 5, die Verbindungsleitung 6, das Strommeßgerät 8 und die regelbare Gleichspannungsquelle 12 entsprechen der Ausführungsform gemäß Figur 1. Die Elektrode 15 ist vom gleichen Typ wie in Figur 3. Sie wird jedoch mit einem Gas konstanten Sauerstoffgehalts gespült und dient zur Messung des Sauerstoffgehalts der Glasschmelze in der edelmetallausgekleideten Speiserrinne. Dazu ist sie über ein Meßgerät 13 und die Leitung 16 mit dem Edelmetall der Speiserrinne verbunden. Anstelle der Zirkoniumoxidkeramik-Elektrode kann zur Messung des Sauerstoffgehalts auch ein massiver Stab aus einem Refraktärmetall wie Molybdän, Wolfram oder Tantal als Elektrode verwendet werden. Der durch das Meßgerät 13 ermittelte Sauerstoffgehalt der Schmelze wird über die Leitung 14 in die regelbare Gleichspannungsquelle 12 eingespeist, die die Potentialdifferenz zwischen Elektrode 5 und Edelmetallauskleidung 3 so einregelt, daß es am Edelmetall 3 nicht zur Sauerstoffblasenbildung kommt. Die obengenannte Regeleinrichtung bestehend aus Elektrode 15 und Meßgerät 16 kann auch zur Automatisierung der Anordnung nach Figur 2 verwendet werden, wenn das Ausgangssignal von Meßgerät 15 zur Steuerung des regelbaren Widerstandes 9 aus Figur 2 benutzt wird. Bei der Anordnung nach Figur 3 wird der Wasserstoffgehalt des Spülgases der Elektrode 5 mit Hilfe einer Gasmischanlage durch das Ausgangssignal des Meßgeräts 13 geregelt. In diesem Fall benötigt man dann mindestens zwei Zirkoniumoxidkeramik-Elektroden. Eine oder mehrere Elektrode(n) nach Figur 3 zur Erzielung einer Potentialdifferenz und die Elektrode 15 nach Figur 4 zur Messung des Sauerstoffgehalts der Glasschmelze in der edelmetallausgekleideten Speiserrinne. An Stelle der Zirkoniumoxideramik-Elektrode 15 kann ebenfalls ein massiver Stab aus einem Refraktärmetall verwendet werden.

Alle geschilderten Ausführungsformen wurden umfassend getestet und haben ergeben, daß sie für die angestrebte Unterdrückung der Bildung von O₂-Gasblasen wirksam eingesetzt werden können.

## Patentansprüche

1. Verfahren zur Unterdrückung der Bildung von O₂-Gasblasen an der Kontaktfläche zwischen einer Glasschmelze und einem aus Edelmetall bestehenden Teil einer Glasschmelzvorrichtung, insbesondere der Edelmetallauskleidung einer Speiserrinne, **dadurch gekennzeichnet, daß** der aus Edelmetall bestehende Teil elektrisch leitend mit einer oder mehreren Elektroden verbunden ist, die beabstandet von dem aus Edelmetall bestehenden Teil in der Glasschmelze angeordnet ist, und daß zwischen der Elektrode und dem aus Edelmetall bestehenden Teil ein Potentialgefälle derart erzeugt wird, daß ein Strom fließt.

2. Verfahren nach Anspruch 1, **dadurch gekennzeichnet, daß** als Edelmetall Platin, Gold, Rhenium, die anderen Metalle der Platingruppe, die Legierungen der genannten Metalle sowie dispersionsoxidverstärkte Varianten der obengenannten Metalle oder ihrer Legierungen verwendet werden.

3. Verfahren nach Anspruch 1, **dadurch gekennzeichnet, daß** die Elektrode in einem Bereich der Glasschmelze angeordnet ist, in dem die Bildung von O₂-Gasblasen unschädlich ist.

4. Verfahren nach Anspruch 1 oder 3, **dadurch gekennzeichnet, daß** die Elektrode in einem Bereich der Glasschmelze angeordnet ist, in dem die O₂-Gasblasen aus der Schmelze entfernt werden können.

5. Verfahren nach einem der Ansprüche 1 bis 4, **dadurch gekennzeichnet, daß** die Elektrode im Einschmelzbereich der Glasschmelzvorrichtung angeordnet ist.

6. Verfahren nach einem der Ansprüche 1 bis 4, **dadurch gekennzeichnet, daß** die Elektrode in der Läuterkammer der Glasschmelzvorrichtung angeordnet ist.

7. Verfahren nach einem der Ansprüche 1 bis 6, **dadurch gekennzeichnet, daß** das Potentialgefälle erzeugt wird, indem der aus Edelmetall bestehende Teil mit dem Minuspol und die Elektrode mit dem Pluspol einer Gleichspannungsquelle verbunden wird.

8. Verfahren nach Anspruch 7, **dadurch gekennzeichnet, daß** das Potentialgefälle mittels eines geeigneten Reglers auf einen bestimmten Wert eingestellt wird.

9. Verfahren nach einem der Ansprüche 1 bis 6, **dadurch gekennzeichnet, daß** das Potentialgefälle erzeugt wird, indem eine oder mehrere positiv geladene Metallionen abgebende Elektrode in der Glasschmelze angeordnet wird.

10. Verfahren nach Anspruch 9, **dadurch gekennzeichnet, daß** eine oder mehrere Elektroden verwendet werden, die ganz oder teilweise aus einem oder mehreren Refraktärmetallen besteht.

11. Verfahren nach Anspruch 9 oder 10, **dadurch gekennzeichnet, daß das** Potentialgefälle mittels eines Regelwiderstandes auf einen bestimmten Wert eingestellt wird.

12. Verfahren nach einem der Ansprüche 1 bis 6, **dadurch gekennzeichnet, daß** das Potentialgefälle erzeugt wird, indem eine oder mehrere negativ geladene O²⁻-Ionen aus der Glasschmelze abführende Elektrode verwendet werden.

13. Verfahren nach Anspruch 12, **dadurch gekennzeichnet, daß** die Elektroden aus einem endseitig geschlossenen Rohr aus für Sauerstoffionen durchlässigem yttrium-, calcium oder magnesiumstabilisierten Zirkonoxid besteht, mit deren Innenwand ein Edelmetalldraht elektrisch leitend verbunden ist, dessen anderes Ende elektrisch leitend mit dem aus Edelmetall bestehenden Teil der Glasschmelzvorrichtung verbunden ist.

14. Verfahren nach Anspruch 13, **dadurch gekennzeichnet, daß** das Potentialgefälle erzeugt wird, indem der Platindraht der Elektrode mit dem Pluspol und der aus Edelmetall bestehende Teil mit dem Minuspol einer Gleichspannungsquelle verbunden wird.

15. Verfahren nach Anspruch 14, **dadurch gekennzeichnet, daß** das Potentialgefälle mittels eines geeigneten Reglers auf einen bestimmten Wert eingestellt wird.

16. Verfahren nach Anspruch 13, **dadurch gekennzeichnet, daß** das Potentialgefälle erzeugt wird, indem der in den Innenraum der Elektrode eintretende Sauerstoff mittels Spülgas abgeführt wird.

17. Verfahren nach Anspruch 16, **dadurch gekennzeichnet, daß** der Sauerstoffpartialdruck im Innenraum der Elektrode über eine Änderung der Zusammensetzung oder der Durchflußmenge des Spülgases geregelt wird.

18. Verfahren nach Anspruch 17, **dadurch gekennzeichnet, daß** die Führungsgröße für die Regelung des Sauerstoffpartialdrucks durch die Messung der elektrischen Spannung zwischen einer Elektrode aus Zirkoniumoxidkeramik und dem Edelmetall der Speiserrinne gewonnen wird.

19. Verfahren nach Anspruch 18, **dadurch gekennzeichnet, daß** die Zirkonoxidkeramik-Elektrode mit einem Referenzgas bekannten Sauerstoffgehalts gespült wird.

20. Verfahren nach Anspruch 16, **dadurch gekennzeichnet, daß** die Führungsgröße für die Regelung des Sauerstoffgehalts des Spülgases durch die Messung der elektrischen Spannung zwischen einer Zirkoniumoxideramik-Elektrode und dem Edelmetall der Speiserrinne gewonnen wird.

21. Verfahren nach den Ausprüchen 10 und 11, **dadurch gekennzeichnet, daß** die Führungsgröße für die Regelung des Widerstandes in der Verbindungsleitung zwischen der Elektrode aus Refraktärmetall in der Wanne und der Edelmetallauskleidung der Speiserrinne durch die Messung der elektrischen Spannung zwischen einer Zirkoniumoxidkeramik-Elektrode und dem Edelmetall der Speiserrinne gewonnen wird.

22. Verfahren nach Anspruch 8, **dadurch gekennzeichnet, daß** die Führungsgröße für die Einstellung der Gleichspannungsquelle durch die Messung der elektrischen Spannung zwischen einer Zirkoniumoxidkeramik-Elektrode und dem Edelmetall der Speiserrinne gewonnen wird.

23. Verfahren nach Anspruch 8, **dadurch gekennzeichnet, daß** die Führungsgröße für die Einstellung der Gleichspannungsquelle durch die Messung der elektrischen Spannung zwischen einer Elektrode aus Refraktärmetall und dem Edelmetall der Speiserrinne gewonnen wird.

24. Verfahren nach Anspruch 16, **dadurch gekennzeichnet, daß** die Führungsgröße für die Regelung des Sauerstoffgehaltes des Spülgases durch die Messung der elektrischen Spannung zwischen einer Elektrode aus Refraktärmetall und dem Edelmetall der Speiserrinne gewonnen wird.

25. Verfahren nach den Ansprüchen 10 und 11, **dadurch gekennzeichnet, daß** die Führungsgröße für die Regelung des Widerstands in der Verbindungsleitung zwischen der Elektrode aus Refraktärmetall in der Wanne und der Edelmetallauskleidung der Speiserrinne durch die Messung der elektrischen Spannung zwischen einer weiteren Elektrode aus Refraktärmetall und dem Edelmetall der Speiserrinne gewonnen wird.

## Claims

1. Method for suppressing the formation of O₂ gas bubbles at the contact surface between a glass melt and a part of a glass-melting device which consists of precious metal, in particular the precious metal lining of a feeder forehearth, **characterized in that** the part which consists of precious metal is electrically conductively connected to one or more electrodes which are arranged in the glass melt at a distance from the part which consists of precious metal, and **in that** a potential gradient is generated between the electrode and the part which consists of precious metal, in such a manner that a current flows.

2. Method according to Claim 1, **characterized in that** the precious metal used is platinum, gold, rhenium, the other metals belonging to the platinum group, the alloys of the abovementioned metals and also dispersion oxide-reinforced variants of the above metals or their alloys.

3. Method according to Claim 1, **characterized in that** the electrode is arranged in a region of the glass melt in which the formation of O₂ gas bubbles is harmless.

4. Method according to Claim 1 or 3, **characterized in that** the electrode is arranged in a region of the glass melt in which the O₂ gas bubbles can be removed from the melt.

5. Method according to one of Claims 1 to 4, **characterized in that** the electrode is arranged in the melting-down region of the glass-melting device.

6. Method according to one of Claims 1 to 4, **characterized in that** the electrode is arranged in the refining chamber of the glass-melting device.

7. Method according to one of Claims 1 to 6, **characterized in that** the potential gradient is generated by the part which consists of precious metal being connected to the negative pole of a DC voltage source and the electrode being connected to the positive pole of a DC voltage source.

8. Method according to Claim 7, **characterized in that** the potential gradient is set to a specific value by means of a suitable controller.

9. Method according to one of Claims 1 to 6, **characterized in that** the potential gradient is generated by one or more electrodes which release positively charged metal ions being arranged in the glass melt.

10. Method according to Claim 9, **characterized in that** one or more electrodes which consist completely or partially of one or more refractory metals are used.

11. Method according to Claim 9 or 10, **characterized in that** the potential gradient is set to a specific value by means of a control resistance.

12. Method according to one of Claims 1 to 6, **characterized in that** the potential gradient is generated by using one or more electrodes which remove negatively charged O²⁻ ions from the glass melt.

13. Method according to Claim 12, **characterized in that** the electrodes consist of a closed-end tube made from yttrium-, calcium- or magnesium-stabilized zirconium oxide which is pervious to oxygen ions, and a precious metal wire is electrically conductively connected to the inner wall thereof, while its other end is electrically conductively connected to that part of the glass-melting device which consists of precious metal.

14. Method according to Claim 13, **characterized in that** the potential gradient is generated by the platinum wire of the electrode being connected to the positive pole of a DC voltage source and the part which consists of precious metal being connected to the negative pole of a DC voltage source.

15. Method according to Claim 14, **characterized in that** the potential gradient is set to a specific value by means of a suitable controller.

16. Method according to Claim 13, **characterized in that** the potential gradient is generated by the oxygen which enters the interior of the electrode being discharged by means of purge gas.

17. Method according to Claim 16, **characterized in that** the oxygen partial pressure in the interior of the electrode is controlled by changing the composition or the quantitative flow rate of the purge gas.

18. Method according to Claim 17, **characterized in that** the guide variable for controlling the oxygen partial pressure is obtained by measuring the electric voltage between an electrode made of zirconium oxide ceramic and the precious metal of the feeder forehearth.

19. Method according to Claim 18, **characterized in that** the zirconium oxide ceramic electrode is purged using a reference gas with a known oxygen content.

20. Method according to Claim 16, **characterized in that** the guide variable for controlling the oxygen content of the purge gas is obtained by measuring the electric voltage between a zirconium oxide ceramic electrode and the precious metal of the feeder forehearth.

21. Method according to Claims 10 and 11, **characterized in that** the guide variable used to control the resistance in the connecting line between the electrode made from refractory metal in the tank furnace and the precious metal lining of the feeder forehearth is obtained by measuring the electric voltage between a zirconium oxide ceramic electrode and the precious metal of the feeder forehearth.

22. Method according to Claim 8, **characterized in that** the guide variable for setting the DC voltage source is obtained by measuring the electric voltage between a zirconium oxide ceramic electrode and the precious metal of the feeder forehearth.

23. Method according to Claim 8, **characterized in that** the guide variable for setting the DC voltage source is obtained by measuring the electric voltage between an electrode made from refractory metal and the precious metal of the feeder forehearth.

24. Method according to Claim 16, **characterized in that** the guide variable for controlling the oxygen content of the purge gas is obtained by measuring the electric voltage between an electrode made from refractory metal and the precious metal of the feeder forehearth.

25. Method according to Claims 10 and 11, **characterized in that** the guide variable for controlling the resistance in the connecting line between the electrode made from refractory metal in the tank furnace and the precious metal lining of the feeder forehearth is obtained by measuring the electric voltage between a further electrode made from refractory metal and the precious metal of the feeder forehearth.

## Revendications

1. Procédé pour inhiber la formation de bulles de gaz O₂ sur la surface de contact entre une masse fondue de verre et une partie en métal noble d'un dispositif de fusion du verre, notamment le revêtement en métal noble d'un canal d'alimentation, **caractérisé en ce que** la partie en métal noble est reliée électriquement avec une ou plusieurs électrodes qui sont disposées à une certaine distance de la partie en métal noble dans la masse fondue de verre et qu'une chute de potentiel est produite entre l'électrode et la partie en métal noble de manière à obtenir la circulation d'un courant.

2. Procédé selon la revendication 1, **caractérisé en ce que** le métal noble utilisé est du platine, de l'or, du rhénium, les autres métaux du groupe des platines, les alliages desdits métaux ainsi que des variantes renforcées par dispersion d'oxyde des métaux mentionnés ci-dessus ou de leurs alliages.

3. Procédé selon la revendication 1, **caractérisé en ce que** l'électrode est disposée dans une zone de la masse fondue de verre dans laquelle la formation de bulles de gaz O₂ est sans dommage.

4. Procédé selon la revendication 1 ou 3, **caractérisé en ce que** l'électrode est disposée dans une zone de la masse fondue de verre dans laquelle les bulles de gaz O₂ peuvent être éliminées de la masse fondue.

5. Procédé selon l'une des revendications 1 à 4, **caractérisé en ce que** l'électrode est disposée dans la zone de fusion du dispositif de fusion du verre.

6. Procédé selon l'une des revendications 1 à 4, **caractérisé en ce que** l'électrode est disposée dans la chambre d'affinage du dispositif de fusion du verre.

7. Procédé selon l'une des revendications 1 à 6, **caractérisé en ce que** la chute de potentiel est produite en reliant la partie en métal noble avec le pôle négatif et l'électrode avec le pôle positif d'une source de tension continue.

8. Procédé selon la revendication 7, **caractérisé en ce que** la chute de potentiel est réglée à une valeur donnée à l'aide d'un organe de réglage approprié.

9. Procédé selon l'une des revendications 1 à 6, **caractérisé en ce que** le chute de potentiel est produite en disposant dans la masse fondue de verre une ou plusieurs électrodes délivrant des ions métalliques à charge positive.

10. Procédé selon la revendication 9, **caractérisé en ce que** l'on utilise une ou plusieurs électrodes qui sont composées en totalité ou en partie d'un ou de plusieurs métaux réfractaires.

11. Procédé selon la revendication 9 ou 10, **caractérisé en ce que** la chute de potentiel est réglée à une valeur donnée à l'aide d'une résistance de réglage.

12. Procédé selon l'une des revendications 1 à 6, **caractérisé en ce que** la chute de potentiel est produite en utilisant une ou plusieurs électrodes qui dissipent des ions O² à charge négative depuis la masse fondue de verre.

13. Procédé selon la revendication 12, **caractérisé en ce que** les électrodes se composent d'un tube fermé à une extrémité et perméable aux ions d'oxygène en oxyde d'yttrium, de calcium ou de zircon stabilisé au magnésium avec la paroi intérieure duquel est relié électriquement un fil en métal noble dont l'autre extrémité est reliée électriquement avec la partie en métal noble du dispositif de fusion du verre.

14. Procédé selon la revendication 13, **caractérisé en ce que** la chute de potentiel est produite en reliant le fil en platine de l'électrode avec le pôle positif et la partie en métal noble avec le pôle négatif d'une source de tension continue.

15. Procédé selon la revendication 14, **caractérisé en ce que** la chute de potentiel est réglée à une valeur donnée à l'aide d'un organe de réglage approprié.

16. Procédé selon la revendication 13, **caractérisé en ce que** la chute de potentiel est produite en évacuant à l'aide d'un gaz de rinçage l'oxygène qui pénètre dans l'espace intérieur de l'électrode.

17. Procédé selon la revendication 16, **caractérisé en ce que** la pression partielle d'oxygène dans l'espace intérieur de l'électrode est régulée en modifiant la composition ou le débit du gaz de rinçage.

18. Procédé selon la revendication 17, **caractérisé en ce que** la grandeur de contrôle pour la régulation de la pression partielle d'oxygène est obtenue en mesurant la tension électrique entre une électrode en céramique oxyde de zirconium et le métal noble du canal d'alimentation.

19. Procédé selon la revendication 18, **caractérisé en ce que** l'électrode en céramique oxyde de zircon est rincée avec un gaz de référence dont la teneur en oxygène est connue.

20. Procédé selon la revendication 16, **caractérisé en ce que** la grandeur de contrôle pour la régulation de la teneur en oxygène du gaz de rinçage est obtenue en mesurant la tension électrique entre une électrode en céramique oxyde de zirconium et le métal noble du canal d'alimentation.

21. Procédé selon les revendications 10 et 11, **caractérisé en ce que** la grandeur de contrôle pour la régulation de la résistance est obtenue dans la ligne de liaison entre l'électrode en métal réfractaire dans le bac et le revêtement en métal noble du canal d'alimentation en mesurant la tension électrique entre une électrode en céramique oxyde de zirconium et le métal noble du canal d'alimentation.

22. Procédé selon la revendication 8, **caractérisé en ce que** la grandeur de contrôle pour le réglage de la source de tension continue est obtenue en mesurant la tension électrique entre une électrode en céramique oxyde de zirconium et le métal noble du canal d'alimentation.

23. Procédé selon la revendication 8, **caractérisé en ce que** la grandeur de contrôle pour le réglage de la source de tension continue est obtenue en mesurant la tension électrique entre une électrode en métal réfractaire et le métal noble du canal d'alimentation.

24. Procédé selon la revendication 16, **caractérisé en ce que** la grandeur de contrôle pour la régulation de la teneur en oxygène du gaz de rinçage est obtenue en mesurant la tension électrique entre une électrode en métal réfractaire et le métal noble du canal d'alimentation.

25. Procédé selon les revendications 10 et 11, **caractérisé en ce que** la grandeur de contrôle pour la régulation de la résistance dans la ligne de liaison entre l'électrode en métal réfractaire dans le bac et le revêtement en métal noble du canal d'alimentation est obtenue en mesurant la tension électrique entre une autre électrode en métal réfractaire et le métal noble du canal d'alimentation.
